# EUROPEAN PATENT SPECIFICATION

(11) **EP 1 327 635 B1**
(45) Date of publication and mention of the grant of the patent: **31.08.2005**
(21) Application number: 03075003.8
(22) Date of filing: 02.01.2003
(51) Int. Cl.: C07F 9/12

(54) **Preparation of phenylphosphate esters of 4,4'-biphenol**
Herstellung von Phenylphosphate Estern mit 4,4'-Biphenol
Procéde de préparation d'esters de phénylphosphate et 4,4'-biphenol

(30) Priority: 06.01.2002 IL 14749002
(43) Date of publication of application: 16.07.2003
(73) Proprietor: Bromine Compounds Ltd., Beer-Sheva 84101 (IL)
(72) Inventor: Weinberg, Olga, Haifa, 32694 (IL); Zilberman, Joseph, Haifa 32990 (IL)
(74) Representative: Long, Giorgio

(56) References cited:
- EP-A- 0 690 063
- EP-A- 1 038 920
- EP-B- 0 466 002
- DATABASE CROSSFIRE BEILSTEIN [Online] Beilstein Institut zur Förderung der Chemischen Wissenschaften, Frankfurt am Main, DE; Chem Abstr. 68:59205c, 1968 LUNDIN ET AL.: Database accession no. BRN 2343386 XP002230545
- DATABASE CA [Online] CHEMICAL ABSTRACTS SERVICE, COLUMBUS, OHIO, US; TAGAYA, MINORU ET AL: "Fireproofed and non-dripping polyester fibers and composition for their manufacture" retrieved from STN Database accession no. 127:347538 XP002230546 & JP 09 268423 A (TORAY INDUSTRIES, INC., JAPAN) 14 October 1997 (1997-10-14)
- ANNAKUTTY K S ET AL: "FLAME RETARDANT POLYPHOSPHATE ESTERS: 1. CONDENSATION POLYMERS OF BISPHENOLS WITH ARYL PHOSPHORODICHLORIDATES: SYNTHESIS, CHARACTERIZATION AND THERMAL STUDIES" POLYMER, JORDAN HILL, OXFORD, GB, vol. 29, April 1988 (1988-04), pages 756-761, XP001071226 ISSN: 0032-3861

## Description

### Field of the Invention

This invention relates to the preparation of phenylphosphate esters of 4,4'-biphenol, and more particularly, to a process for making solid, powdered phenylphosphate esters of 4,4'-biphenol with low acid value and low contents of phenol and residual catalyst. The products obtained have excellent physical properties such as heat and hydrolytic stability.

### Background of the Invention

Phenylphosphate esters are widely used as halogen-free, effective flame retardants for engineering plastics, particularly polyphenylene oxide/ high-impact polystyrene and polycarbonate/acrylonitrile-butadiene- styrene blends. For example European Patent Application No. 1038920 adds phosphate esters to polycarbonate resins, Japanese Patent Publication 9268423 admixes up to 3% phosphate esters into polyester fibers, and European Patent No. 466002 admixes up to 4% into polyaryl ether ketone molding composition. Commercial phenylphosphate esters - resorcinol bis(diphenyl phosphate) and bisphenol A bis(diphenyl phosphate) - are viscous liquids and their application requires special expensive feeding equipment, e.g. metering pumps, heated pipes, etc. Another disadvantage of these liquid phosphates consists in the difficulty of preparing them in a purity meeting the stringent requirements of the polymer industry.

In the preparation of phenylphosphate esters starting either from phosphorus oxychloride, an aromatic diol and phenol or a phenylchlorophosphate and an aromatic diol, the presence of any moisture in the starting materials results in an increase in the acidity of the final product which causes hydrolytic instability when it is formulated in a polycarbonate / acrylonitrile-butadiene-styrene blend. In general, in order to reduce the content of acidic phosphorus-containing impurities in liquid phenylphosphates, neutralization with an alkaline metal hydroxide, or other basic compound such as magnesium hydroxide, is carried out, followed by multiple water washes and distilling to obtain the pure phenylphosphate esters. Formation of undesirable emulsions with the highly viscous phenylphosphate esters accompanies such methodes.

European Patent Application No. 690063 reports a multi-step and tedious method according to which phenylphosphate esters of low acidity can be obtained by treating a crude product with an epoxy compound, heating the resultant material in the presence of water, washing with water, and removing the residual water by distillation.

Another harmful impurity in phenylphosphate esters is phenol. It is known that the presence of phenol may adversely affect the polycarbonate resin during the processing. U.S. Patent No. 5281741 describes a process for making liquid phenylphosphate esters which includes an aqueous, alkaline washing to remove the excess phenol from the phosphate. However, this often leads to emulsions with the product. Moreover, slight amounts of the alkaline metal are present in the product layer. Therefore, the phenylphosphate esters are washed many times with water to remove the alkaline metal. In other reported processes the excess phenol is distilled using complex vacuum stripping equipment, such as a wiped-film or falling-film evaporator, under reduced pressure and at temperatures of more than 200°C (see PCT Applications WO 98/35970, 99/55771).

To obtain the required purity, residual catalyst should be removed from the product. Magnesium chloride catalyst is usually used for making phenylphosphate esters. The most common method employed for catalyst removal has been by treatment with aqueous solutions of hydrochloric acid or phosphorus acid as well as by water-soluble hydrogen phosphate sodium salts. Examples of these routes are described in European Patent Application No. 690063 and Japanese Patent Publications Nos. 98310593, 09192506 and 08176163. However, any such treatment is followed by multiple water washings to remove slight amounts of acids or alkaline metals salts remaining in the liquid phenylphosphate esters after the phase separation. Moreover, due to the high viscosity of liquid phenylphosphate esters, there may be problems in separating the aqueous layer from the oily organic layer.

WO 98/35970 teaches that liquid arylphosphate esters can be used without any purification to remove the MgCl₂ catalyst. However, this approach overlooks corrosion problems originating from Cl⁻ remaining in the product.

Annakutty describes polymeric polyphosphate esters which, after the synthesis in toluene or xylene, were purified by precipitation of chloroform solutions by pentane (Annakutty K.S. and Kishore K: Polymer 29 (1988) 756-60). Lundin describes the preparation of non-polymeric phenylphosphate esters in the presence of pyridine (Lundin BN. et al.: Trudy Instituta Khimii No. 13 (1966) 103-8).

In view of the above, it can be seen that a need exists for solid phenylphosphate esters, which would be much more convenient to process and easier to purify than the viscous, liquid phenylphosphate esters. It should be noted that the commercial solid triphenylphosphate ester is a well known, useful flame retardant. However, its relatively high volatility is a disadvantage at the high processing temperatures.

The present invention overcomes the problems of the prior art by providing a simple and convenient process for preparing solid, powdered phenylphosphate esters of 4,4'-biphenol, which can be easily purified from increased acidity, phenol and residual catalyst by the method of this invention, wherein neither acid nor alkaline washing, nor a tedious vacuum distillation process on a wiped-film or wiped-falling evaporator, are required. The phenylphosphate esters so obtained have low vapor pressures, excellent heat and hydrolytic stability and can be successfully employed as flame retardants in thermoplastic resins.

Other advantages of the invention will appear as the description proceeds.

### Summary of the Invention

This invention provides phenylphosphate ester products of 4,4'-biphenol with the formula 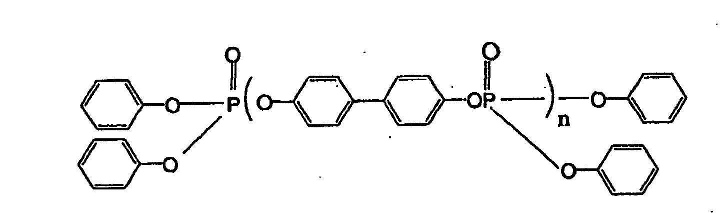 which are solids with melting points between 50 and 74°C, and which can be either an individual bisphosphate where "n" in the formula is 1 (hereinafter indicated also as "monomeric" phosphate), or a mixture of said monomeric phosphate and oligomers, where "n" for each oligomer is an integer from 2 to 5, preferably from 2 to 4, said mixtures being hereinafter indicated also as "oligomeric" phosphates. The phenylphosphate ester products of this invention comprise at least 98%, and preferably at least 98.5% of an ester or a mixture of esters having the above formula. In other words, organic compounds other than those having the above formula make up less than 2%, and preferably less than 1.5%. All the percentages in this application, if not otherwise specified, are area percent values obtained by HLPC analysis.

In a preferred form, this invention provides 4,4'-biphenol-based phenylphosphate ester products having a monomeric 4,4'-biphenol bis(diphenyl phosphate) content of more than 75% (unless otherwise indicated, all percentages in this specification and claims are HPLC area percents) and more preferably of more than 85%.

The phenylphosphate esters of this invention contain less than 2%, and more preferably less than 1.5% of organic compounds other than those of the formula given above. Among these organic by-products are triphenyl phosphate and 4,4'-biphenol diphenyl monophosphate. Both impurities can adversely affect the physical properties of the resin formulations.

Another aspect of this invention are the processes for preparing the aforesaid phenylphosphate esters.

The oligomeric phenylphosphates of 4,4'-biphenol can be prepared by two different routes.

Route A. By initially reacting a phosphorus oxychloride with 4,4'-biphenol in the presence of a Lewis acid catalyst, followed by reaction of the resulting intermediate phosphorochloridate with excess phenol according to the following Scheme 1.
Route B. By reacting 4,4'-biphenol with a mixture of diphenyl chlorophosphate and phenyl dichlorophosphate in the presence of a catalytic amount of a Lewis acid catalyst, according to the following Scheme 2.

The monomeric phenylphosphate, 4, 4'-biphenol bis(diphenyl phosphate), is prepared by reacting 4,4'-biphenol with diphenyl chlorophosphate in the presence of a Lewis acid catalyst.

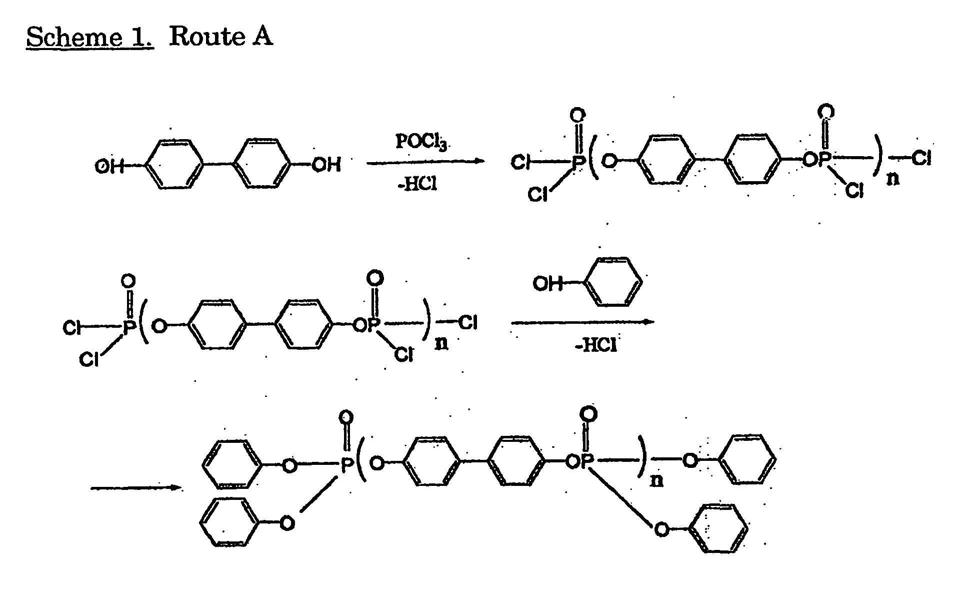

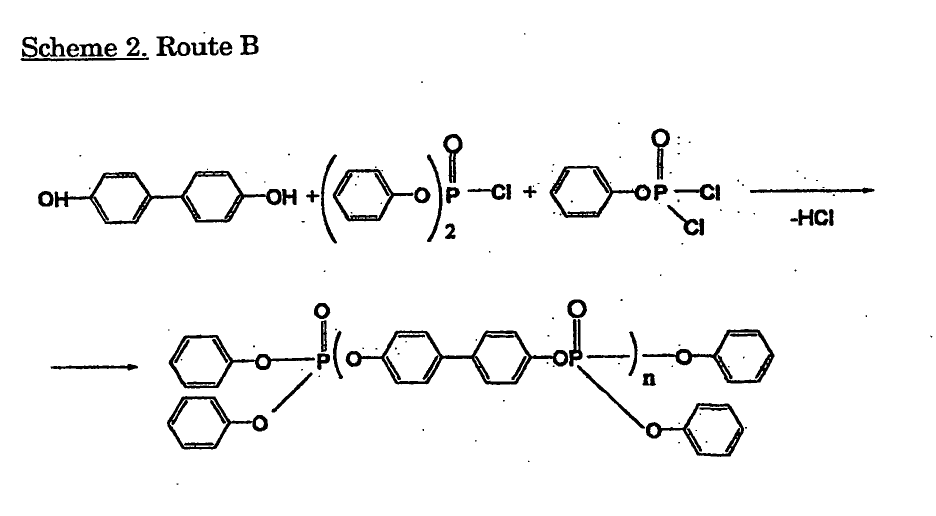

The crude oligomeric and monomeric phenylphosphate esters are obtained as viscous liquids, which contain amounts of phosphorus-containing acid impurities, phenol and residual catalyst, higher than those of the specifications of the commercial phosphates. They are subsequently converted into white, flowable powders by a controlled solidification, effected by dissolving the phenylphosphate esters in a water-miscible alcohol, and gradually adding the resulting solution to a mixture of such an alcohol either with a saturated aqueous solution of sodium bicarbonate or with water alone. The phenylphosphate esters precipitate and concurrently are purified, resulting in white, solid, powdered products with low contents of phosphorus-containing acidic impurities, phenol and residual catalyst. The phenylphosphate ester products of this invention have an acid value from 0 to 0.2 mg KOH per gram of phosphate, and preferably from 0 to 0.1 mg KOH per gram of phosphate. The phenol content in the phenylphosphate ester products of the present invention is from 0 to 0.1%, and more preferably from 0 to 0.05%. The magnesium content is from 0 to 20 ppm, and more preferably from 0 to 5 ppm.

Another advantage of this invention is that high purity, solid, powdered phenylphosphate esters of 4,4'-biphenol, with low acid values and low contents of phenol and residual catalyst, are prepared without the need to carry out either acid or alkaline washings or a tedious, vacuum distillation process on a wiped-film or wiped-falling evaporator.

It is a feature of this invention that the solid, powdered phenylphosphate esters of 4,4'-biphenol prepared according to the present invention, possess superior thermal and hydrolytic stabilities and can be successfully employed as flame retardants in thermoplastic resins.

All the above and other characteristics and advantages of the invention will be better understood through the following illustrative and non-limitative detailed description of the preferred embodiments thereof.

### Detailed Description of Preferred Embodiments

This invention comprises the catalytic synthesis of the crude oligomeric or monomeric phenylphosphate esters of 4,4'-biphenol and their subsequent controlled solidification under such conditions that purification takes place along with their solidification.

In one embodiment, a crude, oligomeric phenylphosphate of 4,4'-biphenol is prepared by two different routes, A and B.

### Route A:

This route comprises a first step in which 4,4'-biphenol is reacted with phosphorus oxychloride (POCl₃) in the presence of a Lewis acid catalyst, and a second step in which the resulting intermediate phosphorochloridate is reacted with excess phenol. Among the suitable Lewis acid catalysts are aluminium chloride, titanium tetrachloride, and preferably, magnesium chloride. The amount of MgCl₂ used is from 0.001 to 0.01 mol per 1 mol of 4,4'-biphenol, and more preferably from 0.002 to 0.004 mol, based on 1 mol 4,4'-biphenol.

In the first step, mixtures with the desired distribution of monomer and higher oligomers can be produced, depending on the particular ratio of POCl₃ and 4,4'-biphenol. One skilled in the art will recognize that the greater the excess of POCl₃, the higher will be the concentration of monomeric diphosphorotetrachloridate compared to oligomers. The amount of POCl₃ used should be more than 3.8 mol per 1 mol 4,4'-biphenol in order to obtain a phenylphosphate ester with a monomer content above 75%. A ratio of more than 5 mol POCl₃ with respect to 1 mol of 4,4'-biphenol is preferable when a product is desired with a monomer content of above 85%. Using a molar ratio greater than 6 is inexpedient due to the need to distil and recycle the larger quantities of POCl₃. When the monomer content in the phosphate esters is below 75% it becomes difficult to carry out the controlled solidification according to the process of the present invention.

The reaction of 4,4'-biphenol with phosphorus oxychloride (POCl₃) (first step) is carried out at a temperature from 90 to 125°C, and preferably from 95 to 120°C, and is continued until the conversion of the 4,4'-biphenol is complete. It is critical to remove any unreacted POCl₃ before adding phenol, in order to minimize the formation of triphenyl phosphate. The excess POCl₃ is fully stripped at 100-150°C, and preferably at 115-125°C, under vacuum which is gradually applied until the pressure is about 20 torr.

In order to attain full conversion of the phosphorochloridates in the the reaction of the intermediate phosphorochloridate with excess phenol (second step), the amount of phenol used is about 3.9-4 moles, based on 1 mol 4,4'-biphenol. An increase of the ratio to above four is inexpedient due to the need to distil and recycle the larger quantities of phenol. Said second step is carried out in the presence of the same catalyst as in the first step, at a temperature from 120 to 180°C, and preferably between 130-160°C. At the end of the reaction a vacuum of 20-300 torr is applied to lead the reaction to completion by driving off the hydrogen chloride formed. Subsequently, the unreacted phenol is removed by sparging with an inert gas such as nitrogen or argon, at 140-170°C, and more preferably at 155-160°C, in combination with vacuum or without it, in order to bring the phenol remaining in the crude phenylphosphate ester to a level of less than 0.5%, and preferably to less than 0.3%.

### Route B:

In an embodiment of the invention, 4,4'-biphenol is reacted with a mixture of diphenyl chlorophosphate and phenyl dichlorophosphate in the presence of the previously described catalysts, preferably MgCl₂, employed in an amount of from 0.001 to 0.01 mol per 1 mol of 4,4'-biphenol, and more preferably between 0.002 and 0.004 mol, based on 1 mol 4,4'-biphenol. The diphenyl chlorophosphate and phenyl dichlorophosphate are introduced in the amount that is stoichiometrically required to react with all the 4,4'-biphenol. The desired distribution of monomeric bisphosphate and higher oligomers can be achieved by varying the particular ratio of diphenyl chlorophosphate and phenyl dichlorophosphate. One skilled in the art will recognize that the greater the amount of diphenyl chlorophosphate, the higher will be the concentration of the monomeric 4,4'-biphenol bis(diphenyl phosphate) compared to oligomers. The content of diphenyl chlorophosphate in its mixture with phenyl dichlorophosphate should be above 94% by weight in order to obtain a product with a 4,4'-biphenol bis(diphenyl phosphate) content of more than 75%. A content of diphenyl chlorophosphate of more than 97% is required when a product is desired with a monomer content of more than 85%. For the phenyIphosphate esters containing less than 75% of the monomer it becomes problematic to carry out the controlled solidification according to the process of the present invention.

Said reaction is carried out at a temperature from 130 to 200°C, and preferably from 150 to 170°C. At the end of the reaction a vacuum of 20-300 torr is applied to lead the reaction to completion by driving off the hydrogen chloride formed.

In another embodiment of this invention, a crude monomeric phenylphosphate, namely 4,4'-biphenol bis(diphenyl phosphate), is prepared by reacting 4,4'-biphenol with diphenyl chlorophosphate in the presence of the previously described catalysts, preferably MgCl₂, employed in an amount from 0.001 to 0.01 mol per 1 mol of 4,4'-biphenol, and more preferably between 0.002 and 0.004 mol, based on 1 mol 4,4'-biphenol. The diphenyl chlorophosphate is introduced in the amount that is stoichiometrically required to react with all the 4,4'-biphenol. Said reaction is carried out at a temperature of between 130 and 200°C, and preferably from 140 to 170°C At the end of the reaction a vacuum of 20-300 torr is applied to lead the reaction to completion by driving off the hydrogen chloride formed.

The crude, liquid phenylphosphate esters thus prepared usually contain a large amount of impurities, such as phosphorus-containing acid by-products, phenol (in Route A only) and residual catalyst. The present invention provides highly purified, solid, powdered phenylphosphate esters of 4,4'-biphenol, both monomeric and oligomeric, by removing the impurities from the crude products by means of a controlled solidification. The conditions are such that a purification takes place along with the controlled solidification resulting in white, solid, powdered products with low contents of phosphorus-containing acidic impurities, phenol and residual catalyst.

The controlled solidification process (hereinafter indicated also as the solidification-purification process) of the present invention will now be detailed.

The solidification-purification method of the present invention starts with dissolving the crude, liquid, viscous phosphate esters in an organic solvent. The organic solvent is selected from water-miscible aliphatic alcohols, such as methanol, propanol and iso-propanol. The especially preferred alcohol is ethanol. Suitably, the concentration of the crude ester in the solvent is about 30-70% by weight, and preferably 45-60%.

In a reactor, the water-miscible alcohol is mixed with an aqueous saturated solution of sodium bicarbonate in a proportion of between 1:4 and 3:1 by weight, and more preferably about 1:1 by weight. The mixture obtained is cooled to 5-10°C. The alcoholic solution of the crude phenylphosphate ester and an amount of the aqueous saturated solution of NaHCO₃, that is approximately half the amount of said alcoholic solution, are separately, but simultaneously, fed into the reactor over a period of 0.5-5 hours, preferably 1-3 hours, while stirring the resulting mixture and maintaining the temperature in the reactor from 0 to 20°C, and preferably from 8 to 15°C . The total amount of the mixture is such that its content of the phenylphosphate ester is about 20-35%, and preferably 25-30% by weight. The higher the content of phenylphosphate ester in the final slurry, the less efficient the purification. A white powder precipitates.

The precipitated white powder is filtered and washed on the filter with a mixture of the aforesaid water-miscible alcohol and water in a proportion of about 1:1 by weight. Washing at this stage with water only will lead to a precipitation from the solvent of the water-insoluble impurities present in the crude product, and the phenylphosphate ester obtained will not be of high purity. On the other hand, washing with the solvent only will result in a significant loss of the product due to dissolution in the solvent.

After removal of the organic solvent by drying under vacuum,the solid product, containing some amount of sodium, is mixed with water, and aqueous 5% hydrochloric acid solution is added while stirring, until the pH of the mixture is 4-6. The product is filtered and washed with water. The amount of water to be used is not particularly limited. With this washing process, the sodium bicarbonate is finally removed, to give, after vacuum drying, a purified phenylphosphate ester of 4,4'-biphenol, with almost no loss resulting from the overall solidification-purification process.

When the monomer content in the phenylphosphate ester is above about 80%, water may optionally be used instead of the aqueous saturated solution of NaHCO₃. The amounts of water used are equal to those of the NaHCO₃ solution. It is obvious that in this case the treatment with aqueous hydrochloric acid is not required. After washing with the alcohol-water mixture the product is dried to afford a purified phenylphosphate ester of 4,4'-biphenol.

It is essential that the monomer content in the crude phenylphosphate ester be above 75% in order to ensure its solidification-purification in accordance with the present invention. The lower the monomer content, the lower the melting point of the product. Thus the pure monomer 4,4'-biphenol bis(diphenyl phosphate) melts at 86°C, while the oligomeric product with about 77% monomer has a melting point of 53-55°C. Naturally such a low melting point may result in difficulties in performing the controlled solidification. Lumps may be formed and the solid product formed may contain more impurities than is preferred. For these reasons, the purification is less effective.

Thee phenylphosphate ester products prepared according the present invention have an acid value of from 0 to 0.2 mg KOH per gram of phosphate, and preferably from 0 to 0.1 mg KOH per gram of phosphate. The phenol content in the phenylphosphate ester products prepared is from 0 to 0.1%, and more preferably from 0 to 0.05%. The magnesium content is from 0 to 20 ppm, and more preferably from 0 to 5 ppm. Tests performed with these products showed that they have excellent physical properties, such as heat and hydrolytic resistance.

Thus, the phenylphosphate esters of 4,4'-biphenol prepared by the method of the present invention are advantageous in processing plastic compositions that comprise them, since they are solid, flowable powders. They are advantageous also in having a low acid value and low phenol content, thereby not causing decomposition of the polycarbonate in the process of molding, and advantageous in having a low content of residual catalyst, thereby being free of chloride ions and thus not causing corrosion of the metal molds. The phosphate esters prepared according to this invention are also advantageous in having excellent heat and hydrolytic stability, thereby showing no changes in plastic compositions that comprise them at high processing temperatures.

A number of illustrative and non-limitative embodiments of the invention will now be described, with reference to the examples below.

### Synthesis Example 1

The reaction is carried out under a nitrogen atmosphere. A 1-l reactor, equipped with a mechanical stirrer, a thermometer, and a distillation head vented to a scrubber, is charged with freshly distilled POCl₃ (767.5 g, 5 mol) and anhydrous MgCl₂ (0.22 g, 0.0023 mol). The reactor contents are heated to 96°C, then 4,4'-biphenol (186 g, 1 mol) is added over 2 h, by means of a solid addition funnel or by the periodical charging of 5-10 approximately equal portions at a temperature of 96-100°C. The addition rate of biphenol should not be much faster than the rate at which it reacts. The reaction is monitored by titration of the amount of by-product HCl gas absorbed in the scrubber. The homogeneous reaction mixture is heated gradually to 112-115°C and held at this temperature until HCl no longer evolves (about 1.5-2 h).

After the reaction is complete, the excess POCl₃ is fully stripped at 90-120°C under vacuum, which is gradually applied until the pressure is 20 torr. The phosphorochloridates mixture obtained is further reacted with phenol in the second step.

Phenol (366.6 g, 3.9 mol), preheated to 70°C, is addeddropwise to the phosphorochloridates mixture, at 120-160°C, over the course of 2 h. The mixture is held at 150°C for an additional 3 h and finally a vacuum of 200 torr is applied to bring the reaction to completion by driving off the HCl formed. HPLC analysis shows no intermediate phosphorochloridates.

The product, with a phenol content of 1.5%, is sparged with nitrogen in combination with vacuum, at 160°C, to reduce the phenol concentration to 0.3% after 3 h and thus to afford a crude phenylphosphate ester as a clear, viscous liquid. The HPLC analysis of the crude phosphate shows the monomer content to be 85%. The product has an acid value of 0.3, and magnesium content of 85 ppm.

### Synthesis Example 2

The procedure described in Synthesis Example 1 is followed, except that the amount of POCl₃ is 4 mol per mol 4,4'-biphenol. The HPLC analysis of the crude phosphate shows the monomer and phenol contents to be 77% and 0.2% respectively. The product has an acid value of 0.25, and magnesium content of 80 ppm.

### Synthesis Example 3

The procedure described in Synthesis Example 1 is followed, except that the excess phenol is not removed. The HPLC analysis of the crude phosphate shows the phenol content to be 1.5%.

### Synthesis Example 4

The procedure described in Synthesis Example 1 is followed, except that the amount of POCl₃ is 3 mol per mol 4,4'-biphenol. The HPLC analysis of the crude phosphate shows the monomer contents to be 68%.

It is clear that the amount of POCl₃ employed in this example is insufficient to obtain the phenylphosphate ester with a monomer content above 75%.

### Synthesis Example 5

The reaction is carried out under a nitrogen atmosphere. A 1-1 reactor, equipped with a mechanical stirrer, a thermometer, and a vent to a scrubber, is charged with a mixture of freshly distilled diphenyl chlorophosphate (228 g, 0.85 mol), phenyl dichlorophosphate (4 g, 0.019 mol), anhydrous MgCl₂ (0.22 g, 0.0023 mol) and 4,4'-biphenol (80.0 g, 0.43 mol). The reactor contents are heated to 150°C over 1 h and held at this temperature for an additional 3 h, then finally a vacuum of 200 torr is applied to bring the reaction to completion by driving off the HCl formed. HPLC analysis shows no 4,4'-biphenol and no intermediate 4,4'-biphenol diphenyl monophosphate. The HPLC analysis of the crude phosphate shows the monomer content to be 90%. The yellowish, clear, viscous product has an acid value of 0.4, and magnesium content of 195 ppm.

### Synthesis Example 6

The procedure described in Synthesis Example 5 is followed, except that the content of diphenyl chlorophosphate in its mixture with phenyl dichlorophosphate is 94 wt%. The HPLC analysis of the crude phosphate shows the monomer content to be 78%.

### Synthesis Example 7

The procedure described in Synthesis Example 5 is followed, except that the content of diphenyl chlorophosphate in its mixture with phenyl dichlorophosphate is 85 wt%. The HPLC analysis of the crude phosphate shows the monomer content to be 65%.

It is clear that the amount of diphenyl chlorophosphate employed in this example is insufficient to obtain the phenylphosphate ester with a monomer content above 75%.

### Synthesis Example 8

The procedure described in Synthesis Example 5 is followed, except that no phenyl dichlorophosphate is used. The HPLC analysis of the crude phosphate shows the monomer content to be about 99%. The product has an acid value of 0.5, and magnesium content of 195 ppm.

### Solidification-purification Example 1

The crude phosphate (100 g) from Synthesis Example 2 is dissolved in 100 g ethanol at 50°C. In a reactor equipped with a mechanical stirrer, a thermometer and two addition funnels, 50 g ethanol is mixed with 50 g of a saturated, aqueous solution of sodium bicarbonate, and the mixture obtained is cooled to 80°C. The ethanol solution of the crude phenylphosphate ester and 100 g of the aqueous saturated solution of NaHCO₃ are simultaneously fed into the reactor by means of two separate addition funnels, over a period of 2 h, while maintaining the temperature in the reactor at a level of 8-15°C. The phosphate concentration in the reaction slurry formed is about 25%. The precipitated white powder is filtered and washed with a mixture of 100 g ethanol and 100 g water.

After removal of the ethanol by drying under vacuum, the solid product, containing 1.5% sodium, is mixed with 250 g water, and aqueous 5% hydrochloric acid is added while stirring, until the pH of the mixture is 6. The product is filtered and washed with water (2 x 250 g). After vacuum drying 98 g (98% yield) of the white, flowable powdered phenylphosphate ester of 4,4'-biphenol, with an acid value of 0.05, phenol content 0.05% and Mg content 5 ppm, is obtained. The product, containing 77%, monomer melts at 53-55°C

### Solidification-purification Example 2

The crude phosphate (190 g) from Synthesis Example 1 is dissolved in 155 g ethanol at 50°C In a reactor equipped with a mechanical stirrer, a thermometer and two addition funnels, 90 g ethanol is mixed with 90 g of water, and the mixture obtained is cooled to 100°C. The ethanolic solution of the crude phenylphosphate ester, and 180 g water, are simultaneously fed to a reactor by means of two separate addition funnels, over a period of 2 h, while maintaining the temperature in the reactor at a level of 10-20°C. The phosphate concentration in the reaction slurry formed is about 27 wt%. The precipitated white powder is filtered and washed with a mixture of 100 g ethanol and 100 g water. After vacuum drying, 187 g (98.5% yield) of the white, flowable powdered phenylphosphate ester of 4,4'-biphenol, with an acid value 0.06, phenol content 0.04% and Mg content 4 ppm, is obtained. The product, containing 85% monomer, melts at 63-65°C.

### Solidification-purification Example 3

The procedure described in Solidification-purification Example 2 is followed, except that the crude phosphate from Synthesis Example 5 is used. A powdered phenylphosphate ester of 4,4'-biphenol, with an acid value 0.1, and Mg content 8 ppm, is obtained. The product, containing 90% monomer, melts at 72-74°C.

### Solidification-purification Example 4

The procedure described in Solidification-purification Example 2 is followed, except that the crude phosphate from Synthesis Example 8 is used. The powdered product with an acid value 0.1, and Mg content 10 ppm, is obtained. The monomer 4,4'-biphenol bis(diphenyl phosphate) melts at 86°C.

### Solidification-purification Example 5

The procedure described in Solidification-purification Example 2 is followed, except that methanol, iso-propanol and n-propanol are substituted for ethanol as the solvent for the controlled solidification-purification. Powdered products, with an acid value 0.05-0.12, phenol content 0.03-0.05% and Mg content 5-10 ppm, are obtained.

### Solidification-purification Example 6

The procedure described in Solidification-purification Example 1 is followed (using the crude phosphate from Synthesis Example 2 with a monomer content of 77%), except that the aqueous, saturated NaHCO₃ solution is replaced by equal amounts of water. No controlled solidification takes place, and as a result no powder is formed. Instead the solidification of the crude product proceeds spontaneously leading to the formation of big white lumps. A product with an acid value 0.2, phenol content 0.12% and Mg content 30 ppm is obtained.

It is clear that the use of water instead of NaHCO₃ solution in this example is ineffective for providing the controlled solidification-purification, and as a result the product obtained still has a high acid value and still contains increased amounts of phenol and Mg.

### Solidification-purification Example 7

The procedure described in Solidification-purification Example 1 is followed, except that the crude phosphate from Synthesis Example 7 with a monomer content of 65% is used. No solidification takes place.

It is clear that a crude phenylphosphate ester containing as little as 65% monomer cannot be solidified due to the low melting point.

### Solidification-purification Example 8

The procedure described in Solidification-purification Example 1 is followed, except that no ethanol or any other aliphatic water-miscible alcohol is used. No controlled solidification takes place, and as a result no powder is formed. Instead, the solidification of the crude product proceeds spontaneously leading to the formation of a solid mass on the reactor bottom. A product, with an acid value 0.25, phenol content 0.2% and Mg content 50 ppm, is obtained.

It is clear that in the absence of an organic solvent no controlled solidification takes place. The product obtained still has a high acid value and still contains increased amounts of phenol and Mg.

### Solidification-purification Example 9

The procedure described in Solidification-purification Example 2 is followed, except that the concentration of the phenylphosphate ester in the slurry formed is 36 wt%. The powdered phenylphosphate ester of 4,4'-biphenol with an acid value 0.15, phenol content 0.1% and Mg content 15 ppm, is obtained.

It is clear that the high phosphate concentration in the slurry employed in this example does not enable the purification of the phenylphosphate ester of 4,4'-biphenol effectively enough. The product still has a relatively high acid value and still contains increased amounts of phenol and Mg.

### Solidification-ourification Example 10

The procedure described in Solidification-purification Example 1 is followed, except that the addition of the phenylphosphate ester solution in ethanol is over a period of 0.5 h. Spontaneous uncontrolled solidification takes place resulting in the formation of white lumps. The product with an acid value 0.15, phenol content 0.1% and Mg content 20 ppm is obtained.

It is clear that a too fast addition of the ethanolic solution of phenylphosphate ester employed in this example does not enable the controlled solidification.

### Solidification-purification Example 11

The procedure described in Solidification-purification Example 1 is followed, except that the crude phosphate from Synthesis Example 3 with a phenol content of 1.5% is used. A powdered product with a phenol content of 0.2% is obtained.

It is clear that the high phenol concentration in the crude product employed in this example does not enable to remove the phenol effectively enough.

### HPLC

While the method of carrying out HPLC analysis is well known to skilled persons, said method will be described here.

The HPLC analyses used to obtain the area % values of this application are conducted on an HP 1090 series instrument equipped with a UV Diod Array Detector. The column used is a 5 micron Hypersil 5 Cl8 (25 cm x 4.6 mm) from Phenomenex.

The sample is dissolved in acetonitrile at a concentration of approximately 6000 ppm. The solution is injected into the HPLC from an autosampler vial. Area % values are calculated for all peaks on the chromatogram.

### HPLC Conditions

| | |
|---|---|
| Flow rate | 1 ml/min |
| Detector wavelength | 254 nm |
| Injection volume | 10 µL |
| Analysis time | 20 mm |
| Temperature | Ambient |

| Acetonitrile / Water Gradient Profile | | |
|---|---|---|
| Time | % Acetonitrile | % Water |
| 0 | 80 | 20 |
| 5 | 80 | 20 |
| 6 | 100 | 0 |
| 20 | 100 | 0 |

| Approximate retention times (min) | |
|---|---|
| P-acids | 1.3-2.6 |
| Phenol | 2.9 |
| 4,4'-Biphenol diphenol monophosphate | 4.7 |
| Triphenyl phosphate | 5.8 |
| Biphenol bis(diphenyl phosphate) | 9.6 |
| Oligomers (two peaks) | 10.9 and 12.4 |

The phenylphosphate esters of this invention can be used in a wide variety of thermoplastic resins, as flame retardants and plasticizers. In addition to the polycarbonate/ acrylonitrile-butadiene-styrene blends and polyphenylene oxide/high impact polystyrene blend mentioned above, examples of the thermoplastic resins include chlorinated polyethylenes, polyethylene, polypropylene,styrene resins, high-impact polystyrene, polybutylene terephthalate, polyvinyl chloride, acrylonitrile-butadiene- styrene copolymer, polyphenylene oxide and mixtures thereof.

## Claims

1. A solid oligomeric, 4,4'-biphenol phenylphosphate ester product, comprising at least 98% and preferably at least 98.5% of a mixture of esters having the formula 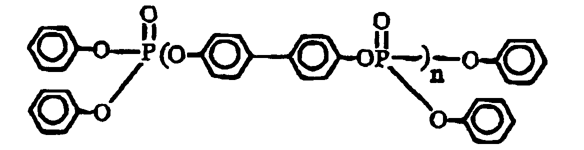 wherein "n" is a whole number from 1 to 5, the amount of ester wherein n is 1 being not higher than 90%, all of said percentages being HPLC area percentages.

2. A 4,4'-biphenol phenylphosphate ester product according to claim 1, which is a solid with a melting point between 50° C and 74°C.

3. A 4,4'-biphenol phenylphosphate ester product according to claim 2, which is a white, flowable powder.

4. A solid composition essentially consisting of 4,4'-biphenol phenylphosphate esters according to claim 1, and comprising organic compounds other than said 4,4'-biphenol phenylphosphate esters in an amount less than 2%, said percentage being HPLC area percentage.

5. A process for preparing an oligomeric 4,4'-biphenol phenylphosphate ester product according to claim 1, which comprises reacting a phosphorus oxychloride with 4,4'-biphenol at 90-120°C, whereby to produce intermediate phosphorochloridates, and subsequently reacting said intermediate phosphorochlondates with excess phenol at 120-180°C.

6. The process of claim 5, wherein the phosphorus oxychloride: 4,4'-biphenol molar ratio is about 3.8:1 to about 6:1.

7. The process of claim 6, wherein the phosphorus oxychloride: 4,4'-biphenol molar ratio is about 5:1 to about 5.5:1.

8. The process of claim 5, wherein phosphorus oxychloride is reacted with 4,4'-biphenol whereby to produce intermediate phosphorochloridates and said intermediate phosphorechloridates are reacted with excess phenol in the presence of a Lewis acid catalyst.

9. The precess of claim 8, wherein the Lewis acid catalyst is magnesium chloride.

10. The process of claim 6, further comprising removing the excess phenol to reduce the same to a level of less than 0.5%, said percentage being HPLC area percentage.

11. A process for the preparation of highly purified 4,4'-biphenol phenylphosphate ester products according to claim 1, which comprises synthesizing said esters, whereby to obtain crude 4,4'-biphenol phenylphosphate esters in viscous, liquid form, and subjecting the same to a controlled solidification.

12. The process of claim 11, wherein the sphesized 4,4'-biphenol phenylphosphate ester products contain impurities comprising phosphorus containing acidic impurities, phenol and residual catalyst, and are purified from said impurities.

13. Purified 4,4'-biphenol phenylphosphate ester product according to claim 1, wherein the acid value is from 0 to 0.2 mg KOH per gram of the phenylphosphate ester.

14. Purified 4,4'-biphenol phenylphosphate ester product according to claim 1, having a phenol content from 0 to 0.1%, said percentage being HPLC area percentage.

15. Purified 4,4'-biphenol phenylphosphate ester product according to claim 1, having a magnesium content from 0 to 20 ppm.

16. The process of claim 11, comprising dissolving the crude 4,4'-bihenol phenylphosphate ester product in a water-miscible organic solvent.

17. The process of claim 16, wherein the water-miscible organic solvent is selected from methanol, ethanol, iso-propanol and propanol.

18. The process of claim 16, comprising feeding the solution of 4,4'-biphenol phenylphosphate ester product in a water-miscible organic solvent into a reactor containing a mixture of the water-miscible organic solvent with an aqueous saturated solution of sodium bicarbonate, or, if the monomer content in the said phenylphosphate ester is above about 80% as measured by HPLC, a mixture of the water-miscible organic solvent with water.

19. The process of claim 18, wherein the water miscible organic solvent and the aqueous saturated solution of sodium bicarbonate are In a proportion of between about 1:4 and 3:1 by weight.

20. The process of claim 18, wherein along with the solution of phenylphosphate ester in the water-miscible organic solvent, approximately half this amount of the aqueous saturated solution of NaHCO₃, are separately, but simultaneously fed into the reactor.

21. The process of claim 18, wherein the time of feeding is between 0.5 to 5 hours.

22. The process of claim 18, wherein the temperature in the reactor is between about 5°C to 20°C.

23. A flame retardant composition, comprising a 4,4'-biphenol phenylphosphate ester of according to claim 1 and a thermoplastic polymer resin.

24. A flame retardant composition according to claim 23, wherein the thermoplastic polymer resin is selected from the group consisting of polycarbonate / acrylonitrile-butadiene- styrene, polyphenylene oxide / high impact polystyrene, chlorinated polyethylenes, polyethylene, polypropylene, styrene resins, high-impact polystyrene, polybutylene terephthalate, polyvinyl chloride, acrylonitrile-butadiene-styrene copolymer, polyphenylene oxide and mixtures thereof.

## Patentansprüche

1. Ein festes oligomeres 4,4'-Biphenolphenylphosphatester-Produkt, umfassend wenigstens 98 % und vorzugsweise wenigstens 98,5 % einer Estermischung mit der Formel 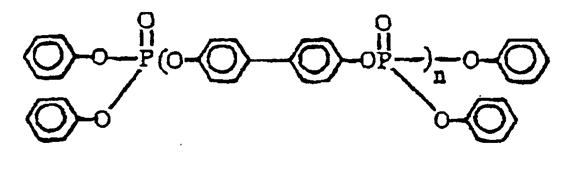 wobei "n" eine ganze Zahl von 1 bis 5 ist, wobei die Menge des Esters, bei dem n 1 ist, nicht größer als 90 % ist, wobei alle Prozentzahlen HPLC-Flächen-Prozentzahlen sind.

2. Ein 4,4'-Biphenolphenylphosphatester-Produkt gemäß Anspruch 1, welches ein Feststoff mit einem Schmelzpunkt zwischen 50 °C und 74 °C ist.

3. Ein 4,4'-Biphenolphenylphosphatester-Produkt gemäß Anspruch 2, welches ein weißes, rieselfähiges Pulver ist.

4. Eine Feststoffzusammensetzung, im Wesentlichen bestehend aus 4,4'-Biphenolphenylphosphatestern gemäß Anspruch 1 und umfassend organische Verbindungen außer den 4,4'-Biphenolphenylphosphatestern in einer Menge von weniger als 2 %, wobei die Prozentzahl eine HPLC-Flächen-Prozentzahl ist.

5. Ein Verfahren zum Herstellen eines oligomeren 4,4'-Biphenolphenylphosphatester-Produkts gemäß Anspruch 1, welches das Umsetzen eines Phosphoroxydchlorids mit 4,4'-Biphenol bei 90-120 °C, wobei Phosphorchloridate als Intermediate produziert werden, und das anschließende Umsetzen der Phosphorchloridatintermediate mit überschüssigem Phenol bei 120-180 °C umfasst.

6. Das Verfahren gemäß Anspruch 5, wobei das Molverhältnis Phosphoroxydchlorid:4,4'-Biphenol etwa 3,8:1 bis etwa 6:1 beträgt.

7. Das Verfahren gemäß Anspruch 6, wobei das Molverhältnis Phosphoroxydchlorid:4,4'-Biphenol etwa 5:1 bis etwa 5,5:1 beträgt.

8. Das Verfahren gemäß Anspruch 5, wobei Phosphoroxydchlorid mit 4,4'-Biphenol umgesetzt wird, wobei Phosphorchloridate als Intermediate produziert werden und die Phosphorchloridatintermediate mit überschüssigem Phenol in der Gegenwart eines LewisSäure-Katalysators umgesetzt werden.

9. Das Verfahren gemäß Anspruch 8, wobei der LewisSäure-Katalysator Magnesiumchlorid ist.

10. Das Verfahren gemäß Anspruch 6, weiterhin umfassend das Entfernen von überschüssigem Phenol, um dieses auf ein Niveau von weniger als 0,5 % zu reduzieren, wobei die Prozentzahl eine HPLC-Flächen-Prozentzahl ist.

11. Ein Verfahren zur Herstellung von hochreinen 4,4'-Biphenolphenylphosphatester-Produkten gemäß Anspruch 1, welches das Synthetisieren der Ester, wobei rohe 4,4'-Biphenolphenylphosphatester in einer viskosen flüssigen Form erhalten werden, und das Aussetzen derselben gegenüber einer kontrollierten Verfestigung umfasst.

12. Das Verfahren gemäß Anspruch 11, wobei die synthetisierten 4,4'-Biphenolphenylphosphatester-Produkte Verunreinigungen, die phosphorhaltige saure Verunreinigungen, Phenol und rückständigen Katalysator umfassen, enthalten und von diesen Verunreinigungen aufgereinigt werden.

13. Aufgereinigtes 4,4'-Biphenolphenylphosphatester-Produkt gemäß Anspruch 1, wobei der Säurewert von 0 bis 0,2 mg KOH pro Gramm des Phenylphosphatesters beträgt.

14. Aufgereinigtes 4,4'-Biphenolphenylphosphatester-Produkt gemäß Anspruch 1 mit einem Phenolgehalt von 0 bis 0,1 %, wobei die Prozentzahl eine HPLC-Flächen-Prozentzahl ist.

15. Aufgereinigtes 4,4'-Biphenolphenylphosphatester-Produkt gemäß Anspruch 1 mit einem Magnesiumgehalt von 0 bis 20 ppm.

16. Das Verfahren gemäß Anspruch 11, umfassend das Lösen des rohen 4,4'-Biphenolphenylphosphatester-Produkts in einem wassermischbaren organischen Lösungsmittel.

17. Das Verfahren gemäß Anspruch 16, wobei das wassermischbare organische Lösungsmittel ausgewählt ist aus Methanol, Ethanol, Isopropanol und Propanol.

18. Das Verfahren gemäß Anspruch 16, umfassend das Zuführen der Lösung aus 4,4'-Biphenolphenylphosphatester-Produkt in einem wassermischbaren organischen Lösungsmittel in einen Reaktor, enthaltend eine Mischung des wassermischbaren organischen Lösungsmittels mit einer wässrigen gesättigten Lösung aus Natriumbicarbonat oder, wenn der Monomergehalt in dem Phenylphosphatester über 80 % liegt, wie durch HPLC gemessen, eine Mischung des wassermischbaren organischen Lösungsmittels mit Wasser.

19. Das Verfahren gemäß Anspruch 18, wobei das wassermischbare organische Lösungsmittel und die wässrige gesättigte Lösung aus Natriumbicarbonat in einem Verhältnis zwischen etwa 1:4 und 3:1 nach Gewicht vorliegen.

20. Das Verfahren gemäß Anspruch 18, wobei gemeinsam mit der Lösung aus Phenylphosphatester in dem wassermischbaren organischen Lösungsmittel etwa die Hälfte dieser Menge der wässrigen gesättigten Lösung aus NaHCO₃ separat, aber gleichzeitig in den Reaktor eingeführt wird.

21. Das Verfahren gemäß Anspruch 18, wobei die Zuführungszeit zwischen 0,5 und 5 Stunden beträgt.

22. Das Verfahren gemäß Anspruch 18, wobei die Temperatur in dem Reaktor zwischen 5 °C und 20 °C beträgt.

23. Eine flammenabweisende Zusammensetzung, umfassend einen 4,4'-Biphenolphenylphosphatester gemäß Anspruch 1 und ein thermoplastisches Polymerharz.

24. Eine flammenabweisende Zusammensetzung gemäß Anspruch 23, wobei das thermoplastische Polymerharz ausgewählt ist aus der Gruppe, bestehend aus Polycarbonat/Acrylnitril-Butadien-Styrol, Polyphenylenoxid/hochschlagfestem Polystyrol, chlorierten Polyethylenen, Polyethylen, Polypropylen, Styrolharzen, hochschlagfestem Polystyrol, Polybutylenterephthalat, Polyvinylchlorid, Acrylnitril-Butadien-Styrol-Copolymer, Polyphenylenoxid und Mischungen daraus.

## Revendications

1. Produit solide oligomère ester de 4,4'-biphénol phénylphosphate, comprenant au moins 98 % et de préférence au moins 98,5 % d'un mélange d'esters ayant la formule 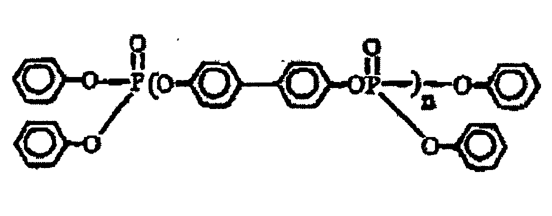 dans laquelle « n » est un nombre entier de 1 à 5, la quantité d'ester dans laquelle n est 1 n'étant pas supérieure à 90 %, tous lesdits pourcentages étant des pourcentages de surface HPLC.

2. Produit ester de 4,4'-biphénol phénylphosphate selon la revendication 1, qui est un solide avec un point de fusion entre 50°C et 74°C.

3. Produit ester de 4,4'-biphénol phénylphosphate selon la revendication 2, qui est une poudre blanche fluide.

4. Composition solide essentiellement composée d'esters de 4,4'-biphénol phénylphosphate selon la revendication 1, et comprenant des composés organiques autres que lesdits esters de 4,4'biphénol phénylphosphate dans une quantité inférieure à 2 %, ledit pourcentage étant un pourcentage de surface HPLC.

5. Procédé de préparation d'un produit oligomère ester de 4,4'-biphénol phénylphosphate selon la revendication 1, qui comprend la mise en réaction d'un oxychlorure de phosphore avec du 4,4'-biphénol à 90-120°C, afin de produire des phosphorochloridates intermédiaires, et ensuite la mise en réaction desdits phosphorochloridates intermédiaires avec un excès de phénol à 120-180°C.

6. Procédé selon la revendication 5, dans lequel le rapport molaire oxychlorure de phosphore sur 4,4'-biphénol est d'environ 3,8:1 à environ 6:1.

7. Procédé selon la revendication 6, dans lequel le rapport molaire oxychlorure de phosphore sur 4,4'-biphénol est d'environ 5:1 à environ 5,5:1.

8. Procédé selon la revendication 5, dans lequel l'oxychlorure de phosphore est mis en réaction avec du 4,4'-biphénol afin de produire des phosphorochloridates intermédiaires et lesdits phosphorochloridates intermédiaires sont mis en réaction avec du phénol en excès en présence d'un catalyseur acide de Lewis.

9. Procédé selon la revendication 8, dans lequel le catalyseur acide de Lewis est du chlorure de magnésium.

10. Procédé selon la revendication 6, comprenant en outre l'élimination du phénol en excès afin de réduire celui-ci à un niveau inférieur à 0,5 %, ledit pourcentage étant un pourcentage de surface HPLC.

11. Procédé pour la préparation de produits ester de 4,4'-biphénol phénylphosphate hautement purifiés selon la revendication 1, qui comprend le fait de synthétiser lesdits esters, afin d'obtenir des esters de 4,4'-biphénol phénylphosphate bruts sous une forme liquide visqueuse, et de soumettre ceux-ci à une solidification contrôlée.

12. Procédé selon la revendication 11, dans lequel les produits ester de 4,4'-biphénol phénylphosphate synthétisés contiennent des impuretés comprenant des impuretés acides contenant du phosphore, du phénol et un catalyseur résiduel, et dans lequel ils sont purifiés desdites impuretés.

13. Produit ester de 4,4'-biphénol phénylphosphate purifié selon la revendication 1, dans lequel-le degré d'acidité varie de 0 à 0,2 mg de KOH par gramme d'ester de phénylphosphate.

14. Produit ester de 4,4'-biphénol phénylphosphate purifié selon la revendication 1, ayant une teneur en phénol de 0 à 0,1 %, ledit pourcentage étant un pourcentage de surface HPLC.

15. Produit ester de 4,4'-biphénol phénylphosphate purifié selon la revendication 1, ayant une teneur en magnésium de 0 à 20 ppm.

16. Procédé selon la revendication 11, comprenant la dissolution du produit ester de 4,4'-biphénol phénylphosphate brut dans un solvant organique miscible à l'eau.

17. Procédé selon la revendication 16, dans lequel le solvant organique miscible à l'eau est choisi à partir du méthanol, de l'éthanol, de l'iso-propanol et du propanol.

18. Procédé selon la revendication 16, comprenant l'alimentation de la solution de produit ester de 4,4'-biphénol phénylphosphate dans un solvant organique miscible à l'eau dans un réacteur contenant un mélange du solvant organique miscible à l'eau avec une solution aqueuse saturée de bicarbonate de sodium, ou, si la teneur en monomère dans ledit ester de phénylphosphate est supérieure à 80 % mesuré par HPLC, un mélange du solvant organique miscible à l'eau avec de l'eau.

19. Procédé selon la revendication 18, dans lequel le solvant organique miscible à l'eau et la solution aqueuse saturée de bicarbonate de sodium sont dans une proportion entre environ 1:4 et 3:1 en poids.

20. Procédé selon la revendication 18, dans lequel de concert avec la solution d'ester de phénylphosphate dans un solvant organique miscible à l'eau, approximativement la moitié de cette quantité de solution aqueuse saturée de Na HCO₃, sont alimentés séparément mais simultanément dans le réacteur.

21. Procédé selon la revendication 18, dans lequel le temps d'alimentation varie entre 0,5 et 5 heures.

22. Procédé selon la revendication 18, dans lequel la température dans le réacteur varie entre environ 5°C et 20°C.

23. Composition ignifuge comprenant un ester de 4,4'-biphénol phénylphosphate selon la revendication 1 et une résine polymère thermoplastique.

24. Composition ignifuge selon la revendication 23, dans laquelle la résine polymère thermoplastique est choisie à partir du groupe composé de polycarbonate / d'acrylonitrile-butadiène-styrène, d'oxyde de polyphénylène / polystyrène à résistance élevée aux chocs, de polyéthylènes chlorés, de polyéthylène, de polypropylène, de résines de styrène, de polystyrène à résistance élevée aux chocs, de téréphtalate de polybutylène, de polychlorure de vinyle, d'un copolymère acrylonitrile-butadiène-styrène, d'oxyde de polyphénylène et de mélanges de ceux-ci.
